(19) Europäisches Patentamt
European Patent Office
Office européen des brevets

(11) Veröffentlichungsnummer: **0 150 754**
**B1**

(12) **EUROPÄISCHE PATENTSCHRIFT**

(45) Veröffentlichungstag der Patentschrift: **15.04.87**

(51) Int. Cl.[4]: **C 09 F 1/04, D 21 H 3/34**

(21) Anmeldenummer: **85100334.3**

(22) Anmeldetag: **15.01.85**

(54) **Modifizierte Kolophoniumharze, Verfahren zu ihrer Herstellung, ihre Verwendung und solche modifizierten Kolophoniumharze enthaltende Papierleimungsmittel.**

(30) Priorität: **19.01.84 AT 169/84**

(43) Veröffentlichungstag der Anmeldung: **07.08.85 Patentblatt 85/32**

(45) Bekanntmachung des Hinweises auf die Patenterteilung: **15.04.87 Patentblatt 87/16**

(84) Benannte Vertragsstaaten: **BE CH DE FR GB IT LI NL SE**

(56) Entgegenhaltungen:
**FR-A- 1 195 295**
**FR-A- 1 196 409**

(73) Patentinhaber: **Krems-Chemie Gesellschaft m.b.H.**
**Hafenstrasse 77**
**A-3500 Krems (AT)**

(72) Erfinder: **Ronge, Helmut, Dr.**
**Ufergasse 1**
**A-3500 Krems (AT)**
Erfinder: **Prantz, Erhard. Dr.**
**Schillerstrasse 13**
**A-3500 Krems (AT)**
Erfinder: **Schoerkhuber, Wolfgang. Dr.**
**Gausegasse 6/18**
**A-3500 Krems. (AT)**

(74) Vertreter: **Utermann, Jasper, Dr.**
**BAYER AG Konzernverwaltung RP Patentabteilung**
**D-5090 Leverkusen Bayerwerk (DE)**

**EP 0 150 754 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft auf spezielle Weise modifizierte Kolophoniumharze, die mit Formaldehyd und/oder α,β-ungesättigten Carbonylverbindungen verstärkt und mit Aminoalkoholen verestern sind, ein Verfahren zur Herstellung solcher speziell modifizierter Kolophoniumharze, ihre Verwendung als Papierleimungsmittel und Papierleimungsmittel in Form wäßriger Dispersionen, die solche speziell modifizierten Kolophoniumharze enthalten.

Die Verwendung von wässrigen, Kolophoniumharze enthaltenden Dispersionen zur Leimung von Papieren ist seit langem bekannt und wird z. B. in Casey, Pulp and Paper, 2. Auflage, Band II : Papermaking, Seiten 1043-1066, Interscience Publishers, New York, 1961, beschrieben. Die Kolophoniumharze, z. B. Wurzelharz, Balsamharz, Tallharz und ähnliche werden dabei üblicherweise verstärkt, d. h. mit α,β-ungesättigten Carbonylverbindungen oder Formaldehyd umgesetzt, bevor sie zu Dispersionen verarbeitet werden. Diese Verstärkung soll die Ergiebigkeit des Leimungsmittels steigern und, im Falle des Formaldehyds, eine gegebenenfalls vorhandene Kristallisationsneigung vermindern. Die Umsetzung der Kolophoniumharze mit α,β-ungesättigten Carbonylverbindungen, beispielsweise mit Acrylsäure, Fumarsäure, Maleinsäure oder deren zugänglichen Anhydriden, beruht auf einer Adduktbildung nach Diels-Alder mit im Kolophoniumharz enthaltenen Harzsäuren geeigneter Struktur, beispielsweise mit Lävopimarsäure.

In der US-PS 3,044,890 werden Papierleimungsmittel beschrieben, die Kolophoniumharze enthalten, die mit α,β-ungesättigten Carbonylverbindungen verstärkt und zusätzlich verestert sind. Als Veresterungskomponenten werden Glyzerin und Ethylenglykol genannt.

In der DE-PS 11 31 348 werden Papierleime beschrieben, die entweder überwiegend verseifte Harze (Harzseifen) mit geringem Gehalt an unverseiftem Harz (Freiharz) enthalten oder überwiegend unverseifte Harze mit einem gewissen Anteil an Harzseifen. Die letzteren, sogenannte Freiharzleime, können Hilfsemulgatoren und Stabilisatoren enthalten, wie Stearate, Triethanolamin, Kasein, Wachse, sowie Füllstoffe und andere Zusatzmittel, wobei Triethanolamin zusätzlich oder anstelle von Alkalien zur Verseifung der Harzsäuren eingesetzt wird und nicht im Sinne der vorliegenden Erfindung als Alkoholkomponente zur Bildung von Harzsäure-Triethanolamin-Estern. Gemäß der DE-PS 11 31 348 enthalten verstärkte Harze Addukte aus Kolophoniumharz und Maleinsäureanhydrid neben unverändertem Harz. Um verstärkte Harze besser dispergierbar zu machen, wird vorgeschlagen, diesen kleine Mengen von Fettsäuren und/oder Naphthensäuren zuzufügen.

Sämtliche bisher bekannten Papierleime, die verstärkte Harze enthalten, werden bei der technischen Papier-Herstellung im sauren Bereich angewendet, im allgemeinen bei pH-Werten unterhalb 6. Bei höheren pH-Werten, z. B. noch bei pH-Werten zwischen 6 und 7, treten erhebliche Probleme auf, vor allem, wenn man Kreide als preisgünstigen Füllstoff oder kreidehaltigen Streichereiausschuß verwenden will. So kann es zu beträchtlichen Qualitätsunterschieden in der Papierbahn kommen, die von variablen kreidehaltigen Ausschußmengen herrühren, die auf unterschiedliche Aluminiumsulfat-Zusätze zurückgehen, die ihrerseits zur Konstanthaltung des pH-Wertes notwendig sind. Verringerte Korrosionsgefahr und die Einsparung von Mahlungsenergie wie im alkalischen pH-Bereich kommen im pH-Intervall zwischen 6 und 7 noch nicht voll zum Tragen.

Die Arbeitsweise im stärker sauren Bereich ist in Anwesenheit von Kreide überhaupt mit erheblichen Nachteilen verbunden. So können dort durch Reaktion von Kalziumcarbonat mit Aluminiumsulfat scharfkantige Gipskristalle gebildet werden, die das fertige Papier durch Rakelstreifen oder Schnitte unbrauchbar machen und die polierten Zylinder der Papiermaschine beschädigen können. Außerdem kann sich im sauren Bereich Kalziumcarbonat in lösliches Kalziumhydrogencarbonat verwandeln, was zu einer Erhöhung des Härtegrades im Kreislaufwasser der Papiermaschine führt. Daher kann im sauren Bereich als Füllstoff nur das relativ teure Kaolin, nicht jedoch die preisgünstigere Kreide oder kreidehaltige Ausschußprodukte aus Streichereien verwendet werden. Der Hauptnachteil der Leimung im sauren Bereich ist jedoch wie z. B. J. Kaltenbach in « Die neuzeitliche Papierleimung », 2. Auflage (1974), Verlag Dr. Martin Sändig GmbH, Walluf, Seite 219, ausführt, die begrenzte Alterungsbeständigkeit des geleimten Papiers, da Säurereste zum Vergilben und Brüchigwerden des Papiers führen.

Durch eine sogenannte Neutralleimung, d. h. eine Leimung im pH-Bereich oberhalb 7, könnten diese Nachteile vermieden werden, jedoch können dann die bisher bekannten Harzleime nicht mehr eingesetzt werden. Für die Neutralleimung im technischen Maßstab werden bisher nur synthetisch hergestellte Leimungsmittel eingesetzt, beispielsweise Dispersionen, die langkettige dimere Alkylketene enthalten.

Wie W. Kamutzki und Th. Krause im « Wochenblatt für Papierfabrikation », Heft 7 (1983), Seiten 215-222 anmerken, weisen solche Leimungsmittel jedoch den schwerwiegenden Nachteil auf, daß sie mit dem in Papierfabriken für vielfältige Zwecke eingesetzten Aluminiumsulfat nicht verträglich sind. Außerdem können Teilleimungen mit solchen Leimungsmitteln nur mit großen Schwierigkeiten durchgeführt werden.

Versuche, Papierleimungen mit Harzleimen im quasi neutralen oder alkalischen Bereich, z. B. bei pH-Werten im Bereich von 6 bis 9, vorzunehmen, haben wenig befriedigende Ergebnisse geliefert. So muß in diesem pH-Bereich beim Einsatz von Harzleimem zusätzlich zu Aluminiumsulfat Natriumaluminat in genau dosierten Mengen verwendet werden, oder anstelle von Aluminiumsulfat ein anderes Fällungsmittel, wie Aluminiumformiat oder polymeres Aluminiumchlorid. Dabei treten jedoch neue Probleme auf. Zum einen sind die zur Substitution von Aluminiumsulfat vorgeschlagenen Produkte teurer als Aluminiumsulfat, zum anderen werden, insbesondere bei pH-Werten über 7, ungenügende Leimungen, Empfindlichkeiten gegen Kalzium- und Magnesium-Ionen und ein größerer Harzbedarf beobachtet (s. z. B. L. Placzek, « Chemische Produkte für die Papierfabrikation », Seite 205 (1967) ; J. Kaltenbach, « Die neuzeitliche Papierleimung », 2. Auflage, Seiten 196-208 und 275 (1974) ; R. Thummer und K. Schubert, « Wochenblatt für Papierfabrikation », Seite 654 (1979) ; L. Stürmer und G. Poppel, « Wochenblatt für Papierfabrikation », Seite 850 (1982) ; A. Lüftinger und P. Mattei, « Wochenblatt für Papierfabrikation », Seite 779 (1983) und F. J. Roberts und D. M. W. Wilson, Pulp and Paper, Seite 182 (1983)).

Aus der GB-PS 859 787 sind ganz oder teilweise verseifte Harzleime bekannt, die eine oder mehrere der folgenden Komponenten als Leimungsmittel enthalten : (1) Harzester, (2) Ester und/oder Polyester mit mehrwertigen Alkoholen oder Aminoalkoholen von Addukten, die aus Harzen mit einem oder mehreren dienophilen Mono- oder Dicarbonsäuren oder deren Anhydriden in einer Diels-Alder-Reaktion hergestellt wurden, (3) Addukte von einer oder mehreren dienophilen Mono- oder Dicarbonsäuren oder deren Anhydriden mit Estern einer oder mehrerer Harzsäuren (s. Anspruch 1).

Dieser GB-PS kann nicht entnommen werden, welche Eigenschaften Harze haben, die mit Formadehyd und/oder α,β-ungesättigten Carbonylverbindungen verstärkt und zusätzlich mit bestimmten Mengen bestimmter Aminoalkohole verestert sind, denn das einzige Beispiel, das ein mit einem Aminoalkohol verestertes Harz betrifft (Beispiel 10), bezieht sich auf eine Mischung, deren eine Komponente eine Harzseife auf der Basis eines Harz-Maleinsäureanhydrid-Adduktes und deren andere Komponente ein Triethanolamin-Harzester ist. Dieses Leimungsmittel, das wohlgemerkt kein Harz enthält, das gleichzeitig verstärkt (z. B. mit Formaldehyd und/oder einer α,β-ungesättigten Carbonylverbindung) und mit einem Aminoalkohol verestert ist, zeigt keine besonders guten Leimungergebnisse (s. GB-PS 859 787, Fig. 2, Kurve 6). Andere in der GB-PS 859 787 beschriebene Leimungsmittel sind deutlich besser, beispielsweise solche auf der Basis von mit Maleinsäureanhydrid verstärkten und mit Ethylenglykol veresterten Harzen (s. Beispiel 2 und Fig. 1, Kurve 2) oder solche auf der Basis von mit Harzsäure und einer $C_{18}$-Fettsäure veresterten Pentaerythrit (s. GB-PS 859 787, Beispiel 9 und Fig. 2, Kurve 5).

Der GB-PS 859 787 kann nicht entnommen werden, mit welchen Arten von Aminoalkoholen und mit welchen Mengen davon man aus einem mit einer α,β-ungesättigten Carbonylverbindung und/oder Formaldehyd verstärkten Harz ein verbessertes Leimungsmittel erhalten kann. Außerdem ist nichts über das Verhalten solcher Leime bei Leimungen in verschiedenen pH-Bereichen bekannt geworden. Die GB-PS 859 787 lehrt vielmehr, daß mit Aminoalkoholen veresterte Harze eher schlechter sind als z. B. nur mit Maleinsäureanhydrid verstärkte Harze (s. GB-PS 859 878, Beispiele 1 und 10 in Verbindung mit Fig. 1, Kurve 1 und Fig. 2, Kurve 6) und die Eigenschaften des Harzes aus Beispiel 10 (Mischung aus Harz-Maleinsäureanhydrid-Addukt und Triethanolamin-Harzester) sich alleine aus dem Vorhandensein eines Maleinsäureadduktes ergeben.

Es wurden nun modifizierte Kolophoniumharze auf der Basis von mit Formaldehyd und/oder α,β-ungesättigten Carbonylverbindungen verstärkten und mit Aminoalkoholen veresterten Kolophoniumharzen gefunden, die dadurch gekennzeichnet sind, daß sie mit 2,5 bis 10 Gew.-% eines oder mehrerer tertiärer Aminoalkohole, bezogen auf das Ausgangsharz, verestert sind.

Die erfindungsgemäß modifizierten Kolophoniumharze können sich von den üblichen Kolophoniumharzen, z. B. von Wurzelharz, Balsamharz, Tallharz oder beliebigen Mischungen solcher Harze ableiten. Diese Kolophoniumharze können auch vorbehandelt worden sein, z. B. einer Disproportionierung oder einer Behandlung mit Formaldehyd unterworfen worden sein. Ferner können den Ausgangsharzen übliche Streckmittel, beispielsweise Wachse und/oder minderwertige Tallölderivate bis etwa 10 Gew.-%, bezogen auf das Ausgangsharz, beigemengt sein.

Die Verstärkung mit α,β-ungesättigten Carbonylverbindungen kann auf übliche Weise durchgeführt worden sein, beispielsweise mit Fumarsäure, Maleinsäure, Maleinsäureanhydrid oder Mischungen davon. Üblich ist dabei ein Einsatz von 3 bis 12 Gew.-% α,β-ungesättigten Verbindungen, bezogen auf das Ausgangsharz. Wenn eine zusätzliche Behandlung mit Formaldehyd vorgenommen wird, gelangen üblicherweise 0,5 bis 2 Gew.-% Formaldehyd, bezogen auf das Ausgangsharz, zum Einsatz.

Das wesentliche Merkmal der erfindungsgemäß modifizierten Kolophoniumharze ist, daß sie zusätzlich zu einer Verstärkung mit Formaldehyd und/oder α,β-ungesättigten Carbonylverbindungen mit einem oder mehreren tertiären Aminoalkoholen in einer Menge von 2,5 bis 10 Gew.-%, bezogen auf das Ausgangsharz, verestert sind. Die Veresterung mit tertiären Aminoalkoholen kann dabei vor oder nach der Verstärkung vorgenommen worden sein. Die Veresterung mit den tertiären Aminoalkoholen erfolgt auch dann bevorzugt an den Carboxylgruppen der Harzsäuren, wenn die Harze bereits mit einer α,β-ungesättigten Carbonylverbindung umgesetzt worden sind. Sowohl analytisch als auch anwendungstechnisch können keine wesentlichen Unterschiede gefunden werden zwischen erfindungsgemäß modifizierten Harzen, die zuerst verstärkt und dann mit tertiären Aminoalkoholen verestert wurden und solchen, die zuerst mit tertiären Aminoalkoholen verestert und dann verstärkt wurden.

Für die Veresterung geeignete tertiäre Aminoalkohole sind beispielsweise solche der Formel (I)

(Siehe Formel Seite 4 f.)

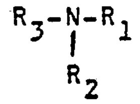

(I)

in der die Reste $R_1$, $R_2$ und $R_3$ gleich oder verschieden sein können und für einen $C_1$ bis $C_6$-Alkylrest oder einen $C_1$ bis $C_6$-Hydroxyalkylrest stehen, wobei mindestens einer der Reste $R_1$ bis $R_3$ für einen $C_1$ bis $C_6$-Hydroxyalkylrest steht. Bevorzugte tertiäre Aminoalkohole sind Triethanolamin und Triisopropanolamin.

Die Veresterung mit tertiären Aminoalkoholen erfolgt erfindungsgemäß mit einer Menge von 2,5 bis 10 Gew.-% eines oder mehrerer tertiärer Aminoalkohole, bezogen auf das eingesetzte Ausgangsharz. Vorzugsweise beträgt diese Menge 3,5 bis 8 Gew.-%, besonders bevorzugt 3,8 bis 6 Gew.-%. Weiterhin bevorzugt ist der Einsatz von tertiären Aminoalkoholen in einem Gewichtsverhältnis zu α,β-ungesättigten Verbindungen von 0,2 bis 3,1 : 1. Besonders bevorzugt beträgt dieses Gewichtsverhältnis 0,3 bis 1,1 : 1.

Geeignete Veresterungstemperaturen sind beispielsweise solche im Bereich von 170 bis 250 °C. Vorzugsweise liegt die Veresterungstemperatur im Bereich 200 bis 220 °C. Die Temperatur kann während der Veresterung konstant gehalten oder innerhalb der angegebenen Grenzen variiert werden. Die Veresterung wird vorzugsweise solange durchgeführt, bis die Säurezahl der Reaktionsmischung konstant bleibt.

Die vorerwähnten üblichen Streckmittel können nicht nur dem Ausgangsharz zugefügt sein, sondern auch zu einem beliebigen Zeitpunkt, beispielsweise nach der Verstärkung und/oder nach der Veresterung zugefügt werden. Der Zusatz von Streckmitteln kann auch unterbleiben.

Die vorliegende Erfindung betrifft weiterhin ein Verfahren zur Herstellung von modifizierten Kolophoniumharzen, das dadurch gekennzeichnet ist, daß man gegebenenfalls vorbehandelte Kolophoniumharze in beliebiger Reihenfolge mit Formaldehyd und/oder α,β-ungesättigten Carbonylverbindungen verstärkt und mit 2,5 bis 10 Gew.-% tertiären Aminoalkoholen, bezogen auf das Ausgangsharz, verestert.

Geeignete Ausgangsharze sind z. B. Wurzelharz, Balsamharz, Tallharz oder beliebige Mischungen solcher Harze. Diese Harze können gegebenenfalls vorbehandelt sein, z. B. einer Disproportionierung oder einer Behandlung mit Formaldehyd unterworfen sein. Ferner können den Ausgangsharzen übliche Streckmittel, z. B. Wachse und/oder minderwertige Tallölderivate bis etwa 10 Gew.-%, bezogen auf das Ausgangsharz, beigemengt sein.

Die Verstärkung mit α,β-ungesättigten Carbonylverbindungen kann auf übliche Weise durchgeführt werden, beispielsweise mit Fumarsäure, Maleinsäure, Maleinsäureanhydrid oder Mischungen davon, die beispielsweise in Mengen von 3 bis 12 Gew.-%, bezogen auf das Ausgangsharz, eingesetzt werden können. Geeignete Reaktionstemperaturen sind beispielsweise solche im Bereich von 170 bis 250 °C. Wenn eine zusätzliche Behandlung mit Formaldehyd vorgenommen wird, können z. B. 0,5 bis 2 Gew.-% Formaldehyd, bezogen auf das Ausgangsharz, eingesetzt und Reaktionstemperaturen im Bereich von 170 bis 250 °C angewendet werden.

Die Veresterung mit tertiären Aminoalkoholen kann beispielsweise mit tertiären Aminoalkoholen der Formel

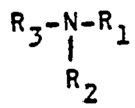

(I)

in der die Reste $R_1$, $R_2$ und $R_3$ gleich oder verschieden sein können und für einen $C_1$ bis $C_6$-Alkylrest oder einen $C_1$ bis $C_6$-Hydroxyalkylrest stehen, wobei mindestens einer der Reste $R_1$ bis $R_3$ für einen $C_1$ bis $C_6$-Hydroxyalkylrest steht, durchgeführt werden. Für diese Veresterung sind Triethanolamin und Triisopropanolamin bevorzugt.

Die tertiären Aminoalkohole werden erfindungsgemäß in einer Menge von 2,5 bis 10 Gew.-%, bezogen auf das Ausgangsharz, eingesetzt. Vorzugsweise beträgt diese Menge 3,5 bis 8 Gew.-%, besonders bevorzugt 3,8 bis 6 Gew.-%. Weiterhin bevorzugt ist der Einsatz von tertiären Aminoalkoholen in einem Gewichtsverhältnis zu α,β-ungesättigten Carbonylverbindungen von 0,2 bis 3,1 : 1. Besonders bevorzugt beträgt dieses Gewichtsverhältnis 0,3 bis 1,1 : 1.

Geeignete Veresterungstemperaturen sind beispielsweise solche im Bereich von 170 bis 250 °C. Vorzugsweise liegt die Veresterungstemperatur im Bereich von 200 bis 220 °C. Die Temperatur kann während der Veresterung konstant gehalten werden oder innerhalb der angegebenen Grenzen variiert werden. Die Veresterung wird vorzugsweise solange durchgeführt, bis die Säurezahl der Reaktionsmischung konstant bleibt. Dann haben im allgemeinen bis zu 90 % der mit den tertiären Aminoalkoholen eingebrachten Hydroxylgruppen mit den Carboxylgruppen der Harzsäuren unter Abspaltung einer äquivalenten Menge Wasser zu den entsprechenden Harzsäureestern reagiert. Das dabei abgespaltene Wasser wird zweckmäßigerweise aus der Reaktionsmischung entfernt.

Die vorerwähnten üblichen Streckmittel können nicht nur dem Ausgangsharz beigemengt worden sein, sondern auch zu einem beliebigen Zeitpunkt, beispielsweise nach der Verstärkung und/oder nach der Veresterung zugefügt werden. Der Zusatz von Streckmitteln kann auch unterbleiben.

Die vorliegende Erfindung betrifft weiterhin die Verwendung der vorstehend beschriebenen speziell modifizierten Kolophoniumharze zur Herstellung von Papierleimungsmitteln. Die Papierleimungsmittel können dabei auf an sich bekannte Weise hergestellt werden, lediglich mit dem Unterschied, daß anstelle der bekannten Harze die vorstehend beschriebenen, mit Formaldehyd und/oder α,β-ungesättigten Carbonylverbindungen verstärkten und zusätzlich mit 2,5 bis 10 Gew.-% tertiären Alkoholen, bezogen auf das Ausgangsharz, veresterten Harze verwendet werden.

Die vorliegende Erfindung betrifft weiterhin Papierleimungsmittel in Form wäßriger Dispersionen, die dadurch gekennzeichnet sind, daß sie die vorstehend beschriebenen modifizierten Kolophoniumharze enthalten, also Kolophoniumharze, die mit Formaldehyd und/oder α,β-ungesättigten Carbonylverbindungen verstärkt und zusätzlich mit 2,5 bis 10 Gew.-% tertiären Aminoalkoholen, bezogen auf das Ausgangsharz, verestert sind.

Erfindungsgemäße Papierleimungsmittel enthalten beispielsweise

von 50 bis 70 Gew.-% Wasser,

von 25,5 bis 47,5 Gew.-% mit Formaldehyd und/oder α,β-ungesättigten Carbonylverbindungen verstärkte und mit 2,5 bis 10 Gew.-% tertiären Aminoalkoholen, bezogen auf das Ausgangsharz, veresterte Kolophoniumharze in Form von Freiharz,

von 1,5 bis 10 Gew.-% verseifte Harze der vorgenannten Art,

von 0,1 bis 0,5 Gew.-% Zusatzstoffe,

von 1,5 bis 6 Gew.-% Emulgatoren und Stabilisatoren.

Zusatzstoffe können beispielsweise Entschäumer und biozid wirkende Verbindungen sein. Geeignete Emulgatoren, die auch als Stabilisatoren wirksam sein können, sind beispielsweise Kasein und Alkylsulfonate.

Die Herstellung der erfindungsgemäßen Papierleimungsmittel kann auf an sich bekannte Weise erfolgen, beispielsweise nach dem sogenannten Inversionsverfahren. Bei diesem wird das Harz bei Temperaturen von beispielsweise 120 bis 180 °C unter kräftigem Rühren und unter Zusatz von wäßrigem Alkali, beispielsweise Natronlauge, Kalilauge und/oder wäßriger Boraxlösung und Emulgatoren zunächst in eine Wasser-in-Öl-Emulsion überführt, die dann durch Zugabe von Wasser invertiert, d. h. in eine Öl-in-Wasser-Emulsion umgewandelt wird. Mit der zugesetzten Alkalimenge wird der Gehalt an Freiharz gesteuert, mit der zugesetzten Menge Wasser der Feststoffgehalt.

Der Freiharzgehalt der erfindungsgemäßen Papierleimungsmittel beträgt vorzugsweise 85 bis 95 Gew.-%, bezogen auf das gesamte vorhandene Harz. Der Feststoffgehalt der erfindungsgemäßen Papierleimungsmittel beträgt vorzugsweise 30 bis 50 Gew.-%, bezogen auf das gebrauchsfertige Papierleimungsmittel.

Die erfindungsgemäß modifizierten Kolophoniumharze und diese enthaltenden Papierleimungsmittel haben eine Reihe von überraschenden Vorteilen. Sie können für Leimungen im sauren, neutralen und alkalischen Bereich, z. B. in einem pH-Bereich von 4 bis 9, vorzugsweise 6 bis 9 und besonders bevorzugt von 6,5 bis 8 eingesetzt werden. Die erfindungsgemäß modifizierten Harze können sowohl für Voll- als auch für Teilleimungen in der Masse verwendet werden. Sie vereinigen, was bisher nicht möglich war, die Vorteile von Harzleimen, z. B. deren Verträglichkeit mit Aluminiumsulfat, mit der Möglichkeit, die Leimung im neutralen bis schwach alkalischen Bereich durchzuführen, bei der das teure Kaolin durch billigere Kreide oder kreidehaltige Ausschüsse aus Streichereien ersetzt werden kann, keine Gipsbildung aus Kreide und Aluminiumsulfat, sowie keine Bildung von Kalziumhydrogencarbonat erfolgen und, vor allem, die Alterungsbeständigkeit des Papiers durch Zurückdrängung der Vergilbung und des Brüchigwerdens stark erhöht wird. Für Leimungen im pH-Bereich von 6 bis 9 unter Verwendung der erfindungsgemäß modifizierten Harze kann Aluminiumsulfat als alleiniges Fällungsmittel eingesetzt werden, wobei 0,5 bis 1 Gew.-% Aluminiumsulfat, bezogen auf atro Papier, völlig ausreichend sind. Bei üblichen Harzleimen werden dagegen 2 bis 3 Gew.-% Aluminiumsulfat, bezogen auf atro Papier, benötigt oder Fällungsmittel, in denen das Aluminiumsulfat ganz oder teilweise durch andere Stoffe, z. B. Natriumaluminat oder polymeres Aluminiumchlorid, ersetzt ist. Ferner kann auftretenden Schwierigkeiten, wie z. B. schädlichem Harz, das sind zellstoffbedingte Harzablagerungen an Gautsch- oder Trockenzylindern — sogenannte Schälstoffe — durch Leimung im sauren Bereich und Erhöhung des Aluminiumsulfat-Zusatzes begegnet werden.

Die mit den erfindungsgemäß modifizierten Kolophoniumharzen erzielbaren Vorteile sind insbesondere deshalb überraschend, da mit anderen Alkoholen als tertiären Aminoalkoholen veresterte und mit α,β-ungesättigten Carbonylverbindungen verstärkten Kolophoniumharze (s. z. B. US-PS 3,044,890) diese Vorteile nicht erhalten werden können. So konnte zwar mit Dispersionen, hergestellt aus den in der US-PS 3.044,890 beschriebenen Harzen oder aus selbstgefertigten verstärkten Harzen, die zusätzlich mit mehrwertigen Alkoholen, wie Glyzerin, Propylenglykol oder Pentaerythrit, verestert waren, im sauren, nicht aber im alkalischen pH-Bereich eine Leimungswirkung erzielt werden.

Hinsichtlich der GB-PS 859,787 ist überraschend, daß verstärkte und mit bestimmten Aminoalkoholen in bestimmten Mengen veresterte Harze gefunden wurden, aus denen sich Leime herstellen lassen, die, wie vorstehend beschrieben, besonders gute, aus der GB-PS 859,787 nicht herleitbare Eigenschaften haben.

Die folgenden Beispiele erläutern die vorliegende Erfindung.

## Beispiele

### Beispiel 1

100 Gewichtsteile Tallharz mit einer Säurezahl von 170 wurden auf 210 °C erhitzt und innerhalb von 20 Minuten langsam 8 Gewichtsteile Triethanolamin zugegeben. Die Temperatur wurde solange gehalten, bis die Säurezahl konstant blieb, was 2,5 Stunden in Anspruch nahm. Die Säurezahl des Harzes betrug zu diesem Zeitpunkt 89. Anschließend wurden innerhalb von 20 Minuten portionsweise 9 Gewichtsteile Maleinsäureanhydrid zugegeben und eine weitere Stunde bei 210 °C gehalten. Das so modifizierte Harz hatte eine Säurezahl von 142 und einen Erweichungspunkt von 79 °C.

### Beispiel 2

100 Gewichtsteile Tallharz mit einer Säurezahl von 170 wurden auf 210 °C erhitzt und innerhalb von 20 Minuten portionsweise 9 Gewichtsteile Maleinsäureanhydrid zugegeben. Nach Ablauf einer Stunde betrug die Säurezahl 200. Anschließend wurden innerhalb von 20 Minuten langsam 8 Gewichtsteile Triethanolamin zugesetzt und die Temperatur von 210 °C 2,5 Stunden gehalten, wobei die Säurezahl einen konstanten Wert von 143 erreichte. Der Erweichungspunkt des so modifizierten Harzes betrug 80 °C.

### Beispiel 3

100 Gewichtsteile Tallharz mit einer Säurezahl von 170 wurden auf 210 °C erhitzt und mit 1,5 Gewichtsteilen Paraformaldehyd und 0,15 Gewichtsteilen p-Toluolsulfonsäure eine Stunde lang bei 210 °C umgesetzt. Dann wurden 9 Gewichtsteile Maleinsäureanhydrid innerhalb von 20 Minuten langsam zugegeben und eine weitere Stunde auf dieser Temperatur gehalten. Die Säurezahl betrug zu diesem Zeitpunkt 196. Anschließend wurden dem Ansatz innerhalb von 20 Minuten langsam 6,3 Gewichtsteile Triethanolamin zugesetzt und die Temperatur von 210 °C 2 Stunden lang gehalten, wobei die Säurezahl einen konstanten Wert von 132 erreichte. Der Erweichungspunkt des so modifizierten Harzes betrug 85 °C.

### Beispiel 4

100 Gewichtsteile Tallharz mit einer Säurezahl von 170 wurden disproportioniert, indem sie 2 Stunden lang auf 270 °C erhitzt wurden. Nach dem Kühlen auf 210 °C wurden innerhalb von 20 Minuten langsam 7,5 Gewichtsteile Triethanolamin zugegeben und diese Temperatur bis zum Erreichen einer konstanten Säurezahl von 84 gehalten, was 2,5 Stunden in Anspruch nahm. Anschließend wurden innerhalb von 20 Minuten portionsweise 7 Gewichtsteile Maleinsäureanhydrid zugesetzt und eine weitere Stunde bei 210 °C gehalten. Das so modifizierte Harz hatte eine Säurezahl von 116 und einen Erweichungspunkt von 74,5 °C.

### Beispiel 5

100 Gewichtsteile Tallharz mit einer Säurezahl von 170 wurden disproportioniert, indem sie 2 Stunden auf 270 °C erhitzt wurden. Nach dem Kühlen auf 210 °C wurden innerhalb von 20 Minuten portionsweise 5 Gewichtsteile Maleinsäureanhydrid zugesetzt. Nach einer Stunde, die Säurezahl betrug zu diesem Zeitpunkt 182, wurden innerhalb von 20 Minuten langsam 4,5 Gewichtsteile Triethanolamin zugegeben. Die Temperatur von 210 °C wurde bis zum Erreichen einer konstanten Säurezahl von 133 gehalten, was 2 Stunden in Anspruch nahm. Der Erweichungspunkt des so modifizierten Harzes betrug 73 °C.

### Beispiel 6

Es wurde verfahren wie in Beispiel 4, jedoch wurden 10 % des Maleinsäureanhydrids durch Fumarsäure ersetzt. Das erhaltene Harz hatte eine Säurezahl von 120 und einen Erweichungspunkt von 79 °C.

### Beispiel 7

Es wurde verfahren wie in Beispiel 4, jedoch wurden 50 % des Maleinsäureanhydrids durch Fumarsäure ersetzt. Das erhaltene Harz hatte eine Säurezahl von 143 und einen Erweichungspunkt von 88,1 °C.

### Beispiel 8

100 Gewichtsteile Tallharz mit einer Säurezahl von 170 wurden auf 210 °C erhitzt und innerhalb von 20 Minuten portionsweise 7,5 Gewichtsteile Fumarsäure zugegeben. Nach Ablauf einer Stunde betrug die Säurezahl 224. Anschließend wurden innerhalb von 20 Minuten langsam 5 Gewichtsteile Triethanolamin zugesetzt und die Temperatur auf 230 °C gesteigert und 2 Stunden gehalten, wobei die Säurezahl einen konstanten Wert von 141 erreichte. Der Erweichungspunkt des so modifizierten Harzes betrug 85 °C.

Beispiel 9

100 Gewichtsteile Tallharz mit einer Säurezahl von 170 wurden auf 210 °C erhitzt und innerhalb von 20 Minuten portionsweise 9,4 Gewichtsteile Maleinsäureanhydrid zugegeben. Nach Ablauf einer Stunde betrug die Säurezahl 190,8. Anschließend wurden innerhalb von 20 Minuten portionsweise 6 Gewichtsteile Triisopropanolamin zugesetzt und die Temperatur von 230 °C 3 Stunden gehalten, wobei die Säurezahl einen konstanten Wert von 146,8 erreichte. Der Erweichungspunkt des so modifizierten Harzes betrug 83 °C.

Beispiel 10 (zum Vergleich ; mit Propylenglykol verestertes Harz)

100 Gewichtsteile Tallharz mit einer Säurezahl von 170 wurden auf 210 °C erhitzt und innerhalb von 20 Minuten portionsweise 7 Gewichtsteile Maleinsäureanhydrid zugegeben. Nach Ablauf einer Stude betrug die Säurezahl 185. Anschließend wurden innerhalb von 20 Minuten langsam 5 Gewichtsteile Propylenglykol zugesetzt und die Temperatur von 210 °C 3 Stunden gehalten, wobei die Säurezahl einen konstanten Wert von 148 erreichte. Der Erweichungspunkt des so modifiziertne Harzes betrug 77 °C.

Beispiel 11 (zum Vergleich ; nicht verestertes Harz)

100 Gewichtsteile Tallharz mit einer Säurezahl von 170 wurden auf 210 °C erhitzt, innerhalb von 20 Minuten portionsweise mit 8,5 Gewichtsteilen Fumarsäure versetzt und eine Stunde auf dieser Temperatur gehalten. Die Säurezahl des so modifizierten Harzes betrug 235 und der Erweichungspunkt 81 °C.

Beispiel 12

Jeweils 100 Gewichtsteile der gemäß den Beispielen 1 bis 11 hergestellten Harze wurden bei 150 °C aufgeschmolzen und unter heftigem Rühren langsam mit 10 Gewichtsteilen einer 25 Gew.-%igen wäßrigen Boraxlösung versetzt. Der resultierenden Wasser-in-Öl-Emulsion wurden 7 Gewichtsteile Kasein und 225 Gewichtsteile Wasser langsam bis zum Entstehen einer Öl-in-Wasser-Emulsion zugesetzt. Die so erhaltenen wäßrigen Dispersionen waren stabil, hatten einen Feststoffgehalt von 30 bis 31 Gew.-% und einen pH-Wert zwischen 6,0 und 6,5.

Beispiel 13 (zum Vergleich ; Harze entsprechend GB-PS 859 787, Beispiel 10)

a) 100 Gewichtsteile Tallharz mit einer Säurezahl von 170 wurden auf 210 °C erhitzt und innerhalb von 20 Minuten portionsweise 13 Gewichtsteile Maleinsäureanhydrid zugegeben. Nach Ablauf einer Stunde betrug die Säurezahl 215. Der Erweichungspunkt des so modifizierten Harzes betrug 85 °C.

b) 100 Gewichtsteile Tallharz mit einer Säurezahl von 170 wurden auf 210 °C erhitzt und innerhalb von 20 Minuten 15 Gewichtsteile Triethanolamin, das ist die berechnete Menge zur vollständigen Veresterung der im Tallharz vorliegenden Säuregruppen, zugesetzt und die Temperatur auf 230 °C gesteigert. Nach 4 Stunden war eine konstante Säurezahl von 12 erreicht. Das so modifizierte Harz wies eine zähflüssige Konsistenz auf.

Beispiel 14 (zum Vergleich ; Leim entsprechend GB-PS 859 787, Beispiel 10)

81,5 Gewichtsteile des Produktes aus Beispiel 13a) wurden bei 150 °C aufgeschmolzen und unter Rühren langsam mit 10 Gewichtsteilen einer 10 Gew.-%igen wäßrigen NaOH-Lösung versetzt. Anschließend wurden 18,5 Gewichtsteile des Produktes aus Beispiel 13b) auf 180 °C erwärmt und langsam zugegeben. Der so erhaltenen Wasser-in-Öl-Emulsion wurden anschließend 7 Gewichtsteile Kasein und 250 Gewichtsteile Wasser bis zum Entstehen einer Öl-in-Wasser-Emulsion zugesetzt. Die so erhaltene wäßrige Dispersion war stabil, hatte einen Feststoffgehalt von 30 Gew.-% und einen pH-Wert von 6,2.

Beispiel 15

Zur Überprüfung der Qualität der gemäß den Beispielen 12 und 14 hergestellten Dispersionen wurden kreisrunde Papierprüfblätter von 20 cm Durchmesser auf einer Blattbildeanlage der Firma Gockel, München, Typ G 8 E, hergestellt. Die Fertigung der Prüfblätter wurde bei verschiedenen pH-Werten, mit verschiedener Leimmenge, gerechnet als Festharz auf atro Papier, und mit und ohne

Verwendung von Kreide als Füllstoff durchgeführt. Der eingesetzte Zellstoff bestand aus einem Verhältnis Fichte : Buche von 70 : 30 und wies einen Mahlgrad von 27 °SR auf. Einer 0,25 Gew.-%igen Suspension des Zellstoffes in Wasser mit Kreide als Füllstoff wurde die notwendige Leimmenge und gegebenenfalls als Retentionshilfsmittel ein kationisches Polysaccharid zugesetzt. Dann erfolgte der Zusatz einer Aluminiumsulfatlösung in einer Menge von 1 Gew.-% Aluminiumsulfat fest auf atro Papier, um den pH-Wert auf 7,2 bis 7,4 einzustellen.

Eine etwa notwendige Korrektur erfolgte mit wäßriger Natriumhydroxidlösung im Dickstoff. Die Kreide wurde als 70 Gew.-%ige Dispersion eingebracht, so daß das fertige Papier einen Aschegehalt von 16 Gew.-% aufwies. Nach dem Absaugen des Verdünnungswassers wurde das Faservlies bei 80 °C auf einen Feuchtigkeitsgehalt von 15 % vorgetrocknet und anschließend in einem Fototrockner bei 120 °C während 5 Minuten fertig getrocknet. Die fertigen Prüfblätter hatten ein durchschnittliches Gewicht von 2,3 g ohne und 2,6 g mit Kreide und wurden einem Cobb-Test 60 unterworfen. Der pH-Wert der Stoffsuspension wurde schrittweise angehoben, wobei festgestellt wurde, daß bis zu einem pH-Wert von 8 keine wesentliche Veränderung der Leimung eintrat. Begleitend wurden auch Tintenschwimmprüfungen durchgeführt, bei der die Prüfstreifen jeweils 3 Minuten in der Prüftinte belassen wurden. Der visuelle Vergleich der einzelnen Proben untereinander ergab eine Übereinstimmung mit den Ergebnissen des Cobb-Tests. Die Ergebnisse des Cobb-Tests sind aus Tabelle 1 ersichtlich.

Tabelle 1

Wasseraufnahmevermögen in g pro m² (Cobb-Wert)
Die angegebenen Werte sind Mittelwerte aus mindestens 6 Einzelbestimmungen.
Zur Leimung wurden die gemäß den Beispielen 12 und 14 hergestellten Dispersionen verwendet.

| Dispersion erhalten nach Beispiel 12 aus dem Harz hergestellt gemäß Beispiel | --- | --- | Ø 16 % | Asche berechnet als Kreide/Papier |
|---|---|---|---|---|
| | 0,4 % | 0,35 % | 0,7 % | Harz/Papier |
| | 2 % | 1 % | 1 % | Aluminiumsulfat/Papier |
| | 5,8 | 7,4 | 7,4 | pH-Wert |
| 1 | 16 | 18 | 16 | |
| 2 | 16 | 19 | 17 | |
| 3 | 17 | 20 | 20 | |
| 4 | 16 | 21 | 18 | |
| 5 | 15 | 18 | 17 | |
| 6 | 15 | 20 | 19 | |
| 7 | 18 | 19 | 20 | |
| 8 | 17 | 18 | 18 | |
| 9 | 16 | 18 | 18 | |
| 10 | 21 | >60 | >60 | |
| 11 | 16 | >60 | >60 | |
| Dispersion aus Beispiel 14 | 21 | >60 | >60 | |

Die Dispersionen erhalten aus den Harzen der Beispiele 10 und 11 und die Dispersion aus Beispiel 14 sind nicht erfindungsgemäß.

Beispiel 16 (zum Vergleich ; Verwendung von tertiärem Aminoalkohol in einer Menge von über 10 Gew.-%)

100 Gewichtsteile Tallharz mit einer Säurezahl von 167 wurden auf 230 °C erhitzt und innerhalb von 20 Minuten portionsweise 10,5 Gewichtsteile Triethanolamin zugegeben und die Temperatur von 210 °C 2,5 Stunden gehalten, wobei die Säurezahl einen konstanten Wert von 68 erreichte.

Anschließend wurden 11,7 % Maleinsäureanhydrid zugegeben und eine weitere Stunde bei 200 °C gehalten. Das Harz hatte dann eine Säurezahl von 110. Der Erweichungspunkt des Harzes betrug 79 °C.

Aus diesem Harz wurde wie in Beispiel 12 beschrieben, eine Dispersion hergestellt und entsprechend Beispiel 15 einem Cobb-Test unterworfen. Mit 0,35 % Harz/Papier, 1 % Aluminiumsulfat/Papier und bei einem pH-Wert von 7,4 wurde ein Cobb-Wert von 62 ermittelt.

Beispiel 17 (zum Vergleich ; Verwendung von tertiärem Aminoalkohol in einer Menge unter 2,5 Gew.-%)

100 Gewichtsteile Tallharz mit einer Säurezahl von 168 wurden auf 210 °C erhitzt und innerhalb von 20 Minuten langsam 1 Gewichtsteil Triethanolamin zugegeben. Die Temperatur wurde so lange gehalten, bis die Säurezahl konstant blieb, was 3 Stunden in Anspruch nahm.

Anschließend wurden innerhalb von 20 Minuten portionsweise 1 Gewichtsteil Fumarsäure zugegeben und eine weitere Stunde bei 210 °C gehalten. Das so modifizierte Harz hatte eine Säurezahl von 190 und einen Erweichungspunkt von 79 °C.

Aus diesem Harz wurde wie in Beispiel 12 beschrieben, eine Dispersion hergestellt und entsprechend Beispiel 15 einem Cobb-Test unterworfen. Mit 0,35 % Harz/Papier, 1 % Aluminiumsulfat/Papier und bei einem pH-Wert von 7,4 wurde ein Cobb-Wert von 60 ermittelt.

**Patentansprüche**

1. Modifizierte Kolphoniumharze auf der Basis von mit Formaldehyd und/oder α,β-ungesättigten Carbonylverbindungen verstärkten und mit Aminoalkoholen veresterten Kolophoniumharzen, dadurch gekennzeichnet, daß sie mit 2,5 bis 10 Gew.-% eines oder mehrerer tertiärer Aminoalkohole, bezogen auf das Ausgangsharz, verestert sind.

2. Modifizierte Kolophoniumharze nach Anspruch 1, dadurch gekennzeichnet, daß sie, bezogen auf das Ausgangsharz, mit 2,5 bis 10 Gew.-% tertiären Aminoalkoholen der Formel

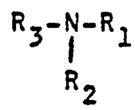

(I)

verestert sind, in der die Reste $R_1$, $R_2$ und $R_3$ gleich oder verschieden sein können für einen $C_1$ bis $C_6$-Alkylrest oder einen $C_1$ bis $C_6$-Hydroxyalkylrest stehen, wobei mindestens einer der Reste $R_1$ bis $R_3$ für einen $C_1$ bis $C_6$-Hydroxyalkylrest steht.

3. Modifizierte Kolophoniumharze auf der Basis von mit Formaldehyd und/oder α,β-ungesättigten Carbonylverbindungen verstärkten und mit Aminoalkoholen veresterten Kolophoniumharze für die Leimung von Papier im pH-Bereich von 6 bis 9, dadurch gekennzeichnet, daß sie mit 2,5 bis 10 Gew.-% eines oder mehrerer tertiärer Aminoalkohole, bezogen auf das Ausgangsharz, verestert sind.

4. Papierleimungsmittel in Form wäßriger Dispersionen, dadurch gekennzeichnet, daß sie modifizierte Kolophoniumharze, die mit Formaldehyd und/oder α,β-ungesättigten Carbonylverbindungen verstärkt und zusätzlich mit 2,5 bis 10 Gew.-% tertiären Aminoalkoholen, bezogen auf das Ausgangsharz, verestert sind, enthalten.

5. Papierleimungsmittel nach Anspruch 4, dadurch gekennzeichnet, daß sie
von 50 bis 70 Gew.-% Wasser,
von 25,5 bis 47,5 Gew.-% mit Formaldehyd und/oder α,β-ungesättigten Carbonylverbindungen verstärkte und mit 2,5 bis 10 Gew.-% tertiären Aminoalkoholen, bezogen auf das Ausgangsharz, veresterte Kolophoniumharze in Form von Freiharz,
von 1,5 bis 10 Gew.-% verseifte Harze der vorgenannten Art,
von 0,1 bis 0,5 Gew.-% Zusatzstoffe,
von 1,5 bis 6 Gew.-% Emulgatoren und Stabilisatoren enthalten.

6. Papierleimungsmittel in Form wäßriger Dispersionen für Leimungen im pH-Bereich von 6 bis 9, dadurch gekennzeichnet, daß sie modifizierte Kolophoniumharze, die mit Formaldehyd und/oder α,β-ungesättigten Carbonylverbindungen verstärkt und zusätzlich mit 2,5 bis 10 Gew.-% tertiären Aminoalkoholen, bezogen auf das Ausgangsharz, verestert sind, enthalten.

7. Verfahren zur Herstellung von modifizierten Kolophoniumharzen, dadurch gekennzeichnet, daß man gegebenenfalls vorbehandelte Kolophoniumharze in beliebiger Reihenfolge mit Formaldehyd und/oder α,β-ungesättigten Carbonylverbindungen verstärkt und mit 2,5 bis 10 Gew.-% tertiären Aminoalkoholen, bezogen auf das Ausgangsharz, verestert.

8. Verfahren nach Anspruch 7, dadurch gekennzeichnet, daß man die Veresterung mit tertiären Aminoalkoholen der Formel

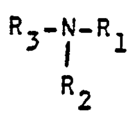

(I)

durchführt, in der die Reste $R_1$, $R_2$ und $R_3$ gleich oder verschieden sein können und für einen $C_1$ bis $C_6$-Alkylrest oder einen $C_1$ bis $C_6$-Hydroxyalkylrest stehen, wobei mindestens einer der Reste $R_1$ bis $R_3$ für einen $C_1$ bis $C_6$-Hydroxylakylrest steht und die Veresterung bei Temperaturen im Bereich von 170 bis 220 °C durchgeführt wird.

9. Verwendung von mit Formaldehyd und/oder α,β-ungesättigten Carbonylverbindungen verstärkten und zusätzlich mit 2,5 bis 10 Gew.-% tertiären Aminoalkoholen, bezogen auf das Ausgangsharz, veresterten Kolophoniumharzen zur Herstellung von Papierleimungsmitteln.

10. Verwendung von mit Formaldehyd und/oder α,β-ungesättigten Carbonylverbindungen verstärkten und zusätzlich mit 2,5 bis 10 Gew.-% tertiären Aminoalkoholen, bezogen auf das Ausgangsharz, veresterten Kolophoniumharzen zur Herstellung von Papierleimungsmitteln für Leimungen im pH-Bereich von 6 bis 9 unter Zusatz von 0,5 bis 1 Gew.-% Aluminiumsulfat, bezogen auf atro Papier.

## Claims

1. Modified colophony rosins based on colophony rosins reinforced with formaldehyde and/or α,β-unsaturated carbonyl compounds and esterified with amino alcohols, characterized in that they are esterified with 2.5 to 10 % by weight, based on the starting rosin, of one or more tertiary amino alcohols.

2. Modified colophony rosins according to claim 1, characterized in that they are esterified with 2.5 to 10 % by weight, based on the starting rosin, of tertiary amino alcohols of the formula

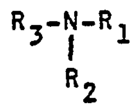

(I)

in which the radicals $R_1$, $R_2$ and $R_3$ can be identical or different and represent a $C_1$ to $C_6$ alkyl radical or a $C_1$ to $C_6$ hydroxyalkyl radical, at least one of the radicals $R_1$ to $R_3$ representing a $C_1$ to $C_6$ hydroxyalkyl radical.

3. Modified colophony rosins based on colophony rosins reinforced with formaldehyde and/or α,β-unsaturated carbonyl compounds and esterified with amino alcohols for sizing paper in a pH range of 6 to 9, characterized in that they are esterified with 2.5 to 10 % by weight, based on the starting rosin, of one or more tertiary amino alcohols.

4. Paper sizing agents in the form of aqueous dispersions, characterized in that they contain modified colophonium rosins which are reinforced with formaldehyde and/or α,β-unsaturated carbonyl compounds and are additionally esterified with 2.5 to 10 % by weight, based on the starting rosin, of tertiary amino alcohols.

5. Paper-sizing agents according to claim 4, characterized in that they contain

50 to 70 % by weight of water,

25.5 to 47.5 % by weight of colophony rosins, in the form of free rosin, which are reinforced with formaldehyde and/or α,β-unsaturated carbonyl compounds and are esterified with 2.5 to 10 % by weight, based on the starting rosin, of tertiary amino alcohols,

1.5 to 10 % by weight of saponified rosins of the above-mentioned kind,

0.1 to 0.5 % by weight of additives and

1.5 to 6 % by weight of emulsifiers and stabilizers.

6. Paper-sizing agents in the form of aqueous dispersions for sizing in a pH range of 6 to 9, characterized in that they contain modified colophony rosins reinforced with formaldehyde and/or α,β-unsaturated carbonyl compounds and additionally esterified with 2.5 to 10 % by weight, based on the starting rosin, of tertiary amino alcohols.

7. Process for the preparation of modified colophony rosins, characterized in that optionally pretreated colophony rosins are, in any desired order, reinforced with formaldehyde and/or α,β-unsaturated carbonyl compounds and esterified with 2.5 to 10 % by weight, based on the starting rosin, of tertiary amino alcohols.

8. Process according to Claim 7, characterized in that the esterification is carried out with tertiary amino alcohols of the formula

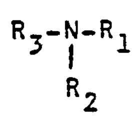

(I)

in which the radicals $R_1$, $R_2$ and $R_3$ can be identical or different and represent a $C_1$ to $C_6$-alkyl radical or a $C_1$ to $C_6$-hydroxyalkyl radical, at least one of the radicals $R_1$ to $R_3$ representing a $C_1$ to $C_6$ hydroxyalkyl radical and the esterification is carried out at temperatures in the range of 170 to 220 °C.

9. Use of colophony rosins reinforced with formaldehyde and/or α,β-unsaturated carbonyl compounds and additionally esterified with 2.5 to 10 % by weight, based on the starting rosin, of tertiary amino alcohols for the preparation of paper-sizing agents.

10. Use of colophony rosins reinforced with formaldehyde and/or α,β-unsaturated carbonyl compounds and additionally esterified with 2.5 to 10 % by weight, based on the starting rosin, of tertiary amino alcohols for the preparation of paper-sizing agents for sizing in a pH range of 6 to 9 with the addition of 0.5 to 1 % by weight of aluminium sulphate, based on the oven-dry paper.

**Revendications**

1. Résines de colophane modifiées à base de résines de colophane renforcées par du formaldéhyde et/ou des composés carbonylés α,β-insaturés et estérifiées par des aminoalcools, caractérisées en ce qu'elles sont estérifiées par 2,5 à 10 % en poids d'un ou plusieurs tert-aminoalcools par rapport à la résine de départ.

2. Résines de colophane modifiées selon la revendication 1, caractérisées en ce qu'elles sont estérifiées par 2,5 à 10 % en poids, par rapport à la résine de départ, de tert-aminoalcools de formule

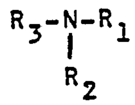

(I)

dans laquelle les symboles $R_1$, $R_2$ et $R_3$, ayant des significations identiques ou différentes, représentent chacun un groupe alkyle en $C_1$-$C_6$ ou hydroxyalkyle en $C_1$-$C_6$, l'un au moins des symboles $R_1$ à $R_3$ représentant un groupe hydroxyalkyle en $C_1$-$C_6$.

3. Résines de colophane modifiées à base de résines de colophane renforcées par du formaldéhyde et/ou des composés carbonylés α,β-insaturés et estérifiées par des aminoalcools, pour le collage du papier dans l'intervalle de pH de 6 à 9, caractérisées en ce qu'elles sont estérifiées par 2,5 à 10 % en poids, par rapport à la résine de départ, d'un ou plusieurs tert-aminoalcools.

4. Colles à papier à l'état de dispersions aqueuses, caractérisées en ce qu'elles contiennent des résines de colophane modifiées, renforcées par du formaldéhyde et/ou des composés carbonylés α,β-insaturés et estérifiés en outre par 2,5 à 10 % en poids de tert-aminoalcools, par rapport à la résine de départ.

5. Colles à papier selon la revendication 4, caractérisées en ce qu'elles contiennent
de 50 à 70 % en poids d'eau,
de 25,5 à 47,5 % en poids de résines de colophane renforcées par du formaldéhyde et/ou des composés carbonylés α,β-insaturés et estérifiées par 2,5 à 10 % en poids de tert-aminoalcools, par rapport à la résine de départ, à l'état de résine libre,
de 1,5 à 10 % en poids de résines saponifiées du type ci-dessus,
de 0,1 à 0,5 % en poids d'additifs,
de 1,5 à 6 % en poids d'agents émulsionnants et stabilisants.

6. Colles à papier à l'état de dispersions aqueuses pour des collages dans l'intervalle de pH de 6 à 9, caractérisées en ce qu'elles contiennent des résines de colophane modifiées, renforcées par du formaldéhyde et/ou des composés carbonylés α,β-insaturés et estérifiées en outre par 2,5 à 10 % en poids de tert-aminoalcools, par rapport à la résine de départ.

7. Procédé de préparation de résines de colophane modifiées, caractérisé en ce que l'on part de résines de colophane soumises éventuellement à un traitement préalable sur lesquelles on procède, dans un ordre quelconque, à un renforcement par le formaldéhyde et/ou des composés carbonylés α,β-insaturés et à une estérification par 2,5 à 10 % en poids de tert-aminoalcools, par rapport à la résine de départ.

8. Procédé selon la revendication 7, caractérisé en ce que l'on procède à l'estérification avec des tert-aminoalcools de formule

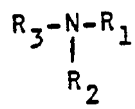

(I)

dans laquelle les symboles $R_1$, $R_2$ et $R_3$, ayant des significations identiques ou différentes, représentent chacun un groupe alkyle en $C_1$-$C_6$ ou hydroxyalkyle en $C_1$-$C_6$, l'un au moins des symboles $R_1$ à $R_3$ représentant un groupe hydroxyalkyle en $C_1$-$C_6$ et en ce que l'estérification est effectuée à une température dans l'intervalle de 170 à 220 °C.

9. Utilisation de résines de colophane renforcées par du formaldéhyde et/ou des composés carbonylés α,β-insaturés et estérifiées en outre par 2,5 à 10 % en poids de tert-aminoalcools, par rapport à

la résine de départ, pour la préparation de colles à papier.

10. Utilisation de résines de colophane renforcées par du formaldéhyde et/ou des composés carbonylés α,β-insaturés et estérifiées en outre par 2,5 à 10 % en poids de tert-aminoalcools, par rapport à la résine de départ, pour la préparation de colles à papier pour des collages dans l'intervalle de pH de 6 à 9 avec adjonction de 0,5 à 1 % en poids de sulfate d'aluminium par rapport au papier sec.